# EUROPEAN PATENT SPECIFICATION

(11) **EP 2 963 716 B1**
(45) Date of publication and mention of the grant of the patent: **07.12.2016**
(21) Application number: 15174004.0
(22) Date of filing: 26.06.2015
(51) Int. Cl.: H01M 8/04992, H01M 8/04014, H01M 8/04664, H01M 8/0606, H01M 8/12

(54) **COMBUSTION DEVICE AND FUEL CELL SYSTEM**
VERBRENNUNGSVORRICHTUNG UND BRENNSTOFFZELLENSYSTEM
DISPOSITIF DE COMBUSTION ET SYSTÈME DE PILE À COMBUSTIBLE

(30) Priority: 30.06.2014 JP 2014134391
(43) Date of publication of application: 06.01.2016
(73) Proprietor: AISIN SEIKI KABUSHIKI KAISHA, Kariya-shi, Aichi 448-8650 (JP); ROBERT BOSCH GMBH, 70442 Stuttgart (DE)
(72) Inventor: KOIDE, Shinya, Kariya-shi,, Aichi 448-8650 (JP); INOUE, Takatsugu, Kariya-shi,, Aichi 448-8650 (JP); KRIEGER, Klaus, 70442 Stuttgart (DE); FRIEDE, Wolfgang, 70442 Stuttgart (DE)
(74) Representative: TBK

(56) References cited:
- EP-A1- 2 530 775
- EP-A1- 2 551 947
- JP-A- 2007 149 496
- JP-A- 2010 170 913
- US-A1- 2009 305 098

## Description

### [Technical Field]

The present invention pertains to a combustion device and a fuel cell system.

### [Background Art]

As a type of fuel cell system, one disclosed in Patent Literature 1 is known. As illustrated in Fig. 1 of Patent Literature 1, a fuel cell system includes a fuel cell body 4; a fuel processing system 3 which supplies a fuel to the fuel cell body by reforming the fuel; two fail-closed type fuel shutoff valves 9 and 10 which shutoff the fuel supplied to the fuel processing system; an air supply system 5 which supplies oxygen to the fuel cell body; and a control device 6 which controls the fail-closed type fuel shutoff valves.

Patent Literature 2 discloses a combustion device having a combustion portion and a plurality of auxiliary equipment used for a combustion operation at the combustion portion, the plurality of auxiliary equipment including at least a plurality of normal closed type fuel shutoff valves provided at a fuel supply pipe for supplying fuel to the combustion portion and opening and closing the fuel supply pipe in which the combustion device further includes a main control portion for over-all controlling of the combustion device.

### [Prior Art Literature]

### [Patent Literature]

[Patent Literature 1] JP2010-170913 A
[Patent Literature 2] EP 2 551 947 A1

### [Summary of the Invention]

### [Problems that the Invention is to Solve]

The control device 6 of the fuel cell system disclosed in Patent Literature 1 performs comprehensive operations of the fuel cell system. However, only a single control device 6 is provided, and thus in a case where the control device 6 fails, there is a concern that an operation of the fuel cell system may not be performed, particularly, a process for closing the two fail-closed type fuel shutoff valves 9 and 10 for shutting off a fuel may not be performed. Therefore, there are demands for detection of a failure in the control device 6, and reliable stopping of the fuel supply by performing a process for closing the fail-closed type fuel shutoff valves 9 and 10 if the control device 6 fails.

The present invention has been made in order to solve the above-described problems, and an object thereof is to detect a failure in a control device and to reliably close a fuel shutoff valve when the failure occurs in a combustion device and a fuel cell system.

### [Means for Solving the Problems]

In order to solve the problems, according to the invention of claim 1, there is provided a combustion device having a combustion portion and a plurality of auxiliary equipment used for a combustion operation at the combustion portion, the plurality of auxiliary equipment including at least a plurality of normal closed type fuel shutoff valves provided at a fuel supply pipe for supplying fuel to the combustion portion and opening and closing the fuel supply pipe in which the combustion device further includes a main control portion for over-all controlling of the combustion device; a plurality of safety control portions for controlling at least the plurality of fuel shutoff valves and operable independently of the main control portion; and a power source shutoff device for shutting off the supply of power source voltage to the each of the plurality of fuel shutoff valves, in which each of the plurality of the safety control portions includes an error detecting portion for detecting own abnormality and abnormality of other safety control portions and a fuel shutoff control portion for shutting off the supply of the fuel by shutting off the supply of the power source voltage by driving the power source shutoff device when an error is detected by the error detecting portion.

With this configuration, the error detecting portion of each of the safety control portions can detect own abnormality and an abnormality of other safety control portions. Therefore, it is possible to reliably detect a failure in the safety control portions. In addition, in a case where abnormality is detected by the error detecting portion, the fuel shutoff control portion of each of the safety control portions drives the power source shutoff device so as to shut off the supply of a power source voltage to the fuel shutoff valves, thereby shutting off the supply of a fuel. Therefore, even if the safety control portions fail, it is possible to reliably stop the supply of a fuel.

In addition, according to the invention of claim 2, in claim 1, the fuel shutoff control portion further controls to give instructions to the fuel shutoff valve to close.

With this configuration, it is possible to more reliably close the fuel shutoff valves, and thus to more reliably stop the supply of a fuel.

In addition, according to the invention of claim 3, in claim 1 or 2, the error detecting portion includes a ROM check portion for detecting own abnormality by checking ROM provided at the safety control portion by self-diagnosis, and the ROM check portion executes a first check process conducted by a first ROM check process program stored in a first storing area in the entire ROM area and a second ROM check process conducted by a second ROM check process program stored in a second storing area different from the first storing area.

With this configuration, the error detecting portion of each of the safety control portions can detect abnormality thereof easily and reliably.

In addition, according to the invention of claim 4, in claim 1 or 2, the error detecting portion includes an oscillator check portion for detecting an existence of own abnormality or abnormality of other safety control portions by checking an oscillator provided at the safety control portions by self-diagnosis, and the oscillator check portion checks the abnormalities based on the data communication state which is the state under communication with other safety control portions which is mutually communicable through synchronizing communication.

With this configuration, the error detecting portion of each of the safety control portions can detect abnormality thereof or abnormality of other safety control portions easily and reliably.

In addition, according to the invention of claim 5, in claim 1 or 2, the error detecting portion includes a mutually observing portion for detecting an existence of own abnormality or abnormality of other safety control portions by mutually observing with one another through communication with the other safety control portions and the mutually observing portion comparing an own cut-in information with another cut-in information in other safety control portions received through communication thereby to detect an existence of abnormality of own or of other safety control portions.

With this configuration, the error detecting portion of each of the safety control portions can detect abnormality thereof or abnormality of other safety control portions easily and reliably.

In addition, according to the invention of claim 6, there is provided a fuel cell system including the combustion device according to any one of claims 1 through 5.

With this configuration, also in the fuel cell system including the combustion device according to any one of claims 1 through 5, the above-described operations and effects related to the respective claims can be achieved.

### [Brief Description of the Drawings]

[Fig. 1] Fig. 1 is a schematic diagram illustrating a summary of an embodiment of a fuel cell system according to the present invention.
[Fig. 2] Fig. 2 is a block diagram illustrating a fuel cell system illustrated in Fig. 1.
[Fig. 3] Fig. 3 is a block diagram illustrating configurations of first and second safety control portions.
[Fig. 4] Fig. 4 is a flowchart of a control program executed in the first and second safety control portions illustrated in Fig. 2.
[Fig. 5] Fig. 5 is a flowchart of a control program (ROM check process) executed in the first and second safety control portions illustrated in Fig. 2.
[Fig. 6] Fig. 6 is a diagram illustrating a ROM area in the ROM check process.
[Fig. 7] Fig. 7 is a flowchart of a control program (RAM check process) executed in the first and second safety control portions illustrated in Fig. 2.
[Fig. 8] Fig. 8 is a flowchart of a control program (register check process) executed in the first and second safety control portions illustrated in Fig. 2.
[Fig. 9] Fig. 9 is a flowchart of a control program (mutual observing process) executed in the first and second safety control portions illustrated in Fig. 2.
[Fig. 10] Fig. 10 is a flowchart of a control program (program sequence check process) executed in the first and second safety control portions illustrated in Fig. 2.
[Fig. 11] Fig. 11 is a flowchart of a control program (program sequence check process) executed in the first and second safety control portions illustrated in Fig. 2.
[Fig. 12] Fig. 12 is a flowchart of a control program (stack overflow check process) executed in the first and second safety control portions illustrated in Fig. 2.
[Fig. 13] Fig. 13 is a flowchart of a control program (command set check process) executed in the first and second safety control portions illustrated in Fig. 2.
[Fig. 14] Fig. 14 is a flowchart of a control program (oscillator check process) executed in the first and second safety control portions illustrated in Fig. 2.

### [Best Mode for Carrying Out the Invention]

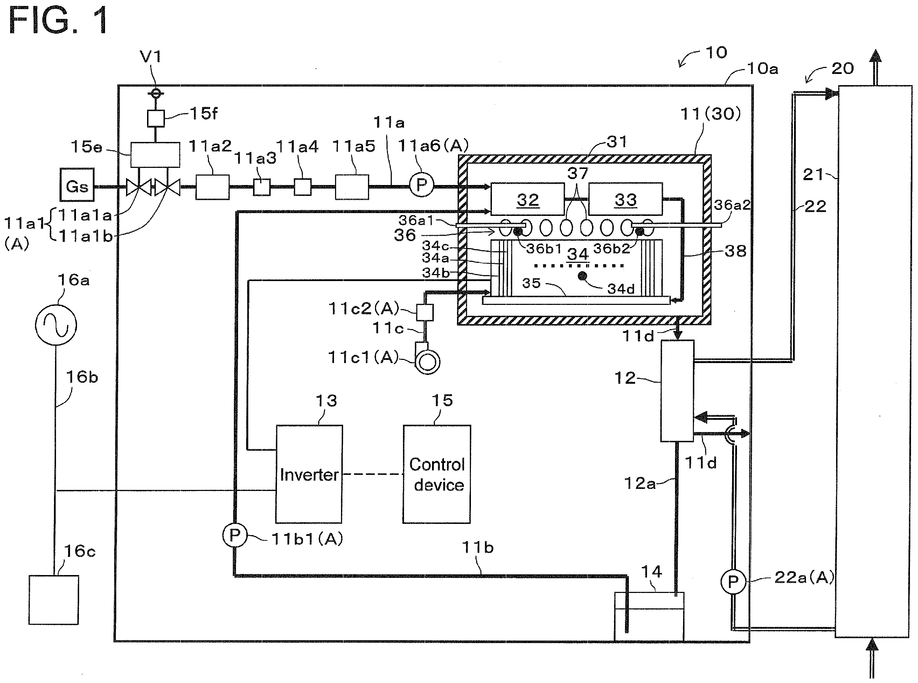

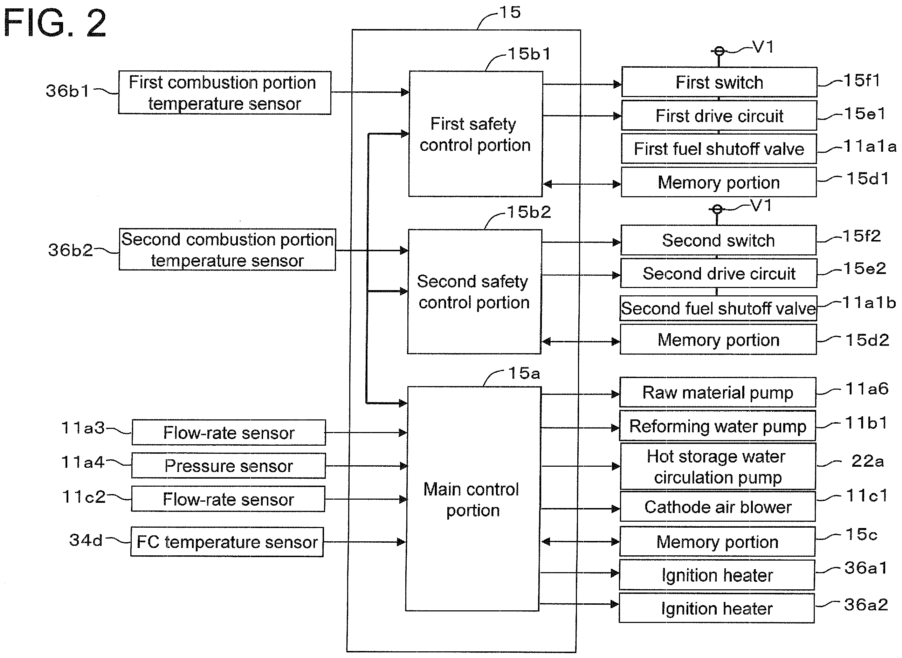

Hereinafter, a description will be made of an embodiment of a fuel cell system according to the present invention. As illustrated in Fig. 1, the fuel cell system includes a power generation unit 10 (corresponding to a combustion device), and a hot-water storage tank 21. The power generation unit 10 includes a housing 10a, a fuel cell module 11, a heat exchanger 12, an inverter device 13, a water tank 14, and a control device 15. As illustrated in Fig. 2, the control device 15 includes a main control portion 15a, a first safety control portion 15b1, and a second safety control portion 15b2 (hereinafter, simply referred to as a safety control portion 15b).

As illustrated in Fig. 1, the fuel cell module 11 is configured to include at least a fuel cell 34 as will be described later. The fuel cell module 11 is supplied with a reforming material, reforming water, and a cathode air. Specifically, the fuel cell module 11 is connected to the other end of a reforming material supply pipe 11 a (fuel supply pipe) of which one end connected to a supply source Gs so as to be supplied with a reforming material. In addition, the fuel cell module 11 is connected to the other end of a water supply pipe 11 b of which one end is connected to the water tank 14 so as to be supplied with reforming water. The water supply pipe 11 b is provided with a reforming water pump 11 b1. Further, the fuel cell module 11 is connected to the other end of a cathode air supply pipe 11c of which one end is connected to a cathode air blower 11 c1 so as to be supplied with cathode air. The cathode air supply pipe 11c is provided with a flow rate sensor 11 c2 which detects a flow rate of the cathode air supplied to the fuel cell 34, that is, a flow rate per unit time.

The reforming material supply pipe 11 a will be described in detail. The reforming material supply pipe 11 a is provided with a fuel shutoff valve 11a1, a desulfurizer 11 a2, a flow rate sensor 11 a3, a pressure sensor 11 a4, a buffer tank 11 a5, and a material pump 11a6 in this order from the upstream side. The fuel shutoff valve 11a1, the desulfurizer 11 a2, the flow rate sensor 11 a3, the pressure sensor 11 a4, the buffer tank 11 a5, and the material pump 11 a6 are stored in the housing 10a.

The fuel shutoff valve 11a1 is a normal closed type valve (formed by two valves in series) which closes or opens the reforming material supply pipe 11 a in response to a command from the control device 15 (the safety control portion 15b). Specifically, the fuel shutoff valve 11a1 is formed of a first fuel shutoff valve 11a1a and a second fuel shutoff valve 11a1b which freely openably/closably perform shutoff. The first fuel shutoff valve 11a1a and the second fuel shutoff valve 11a1b are components with high reliability. The high reliability indicates that, for example, a failure or deterioration in performance does not occur during a period of time from the start of use to the end of use.

In addition, auxiliary equipment A is used to generate power in the fuel cell 34. For example, the auxiliary equipment A includes the first and second fuel shutoff valves 11 a1 a and 11a1b, the respective pumps 11 a6, 11 b1, and 22a, the cathode air blower 11 c1, the respective sensors 11 a3, 11 a4, 11 c2, 34d, 36b1, and 36b2, disclosed in the present specification.

The desulfurizer 11 a2 removes sulfur (for example, a sulfur compound) from a reforming material. The flow rate sensor 11 a3 detects a flow rate of a material (a reforming material) supplied to the fuel cell 34, that is, a flow rate per unit time, and transmits a detection result thereof to the main control portion 15a of the control device 15. The pressure sensor 11 a4 detects pressure (particularly, pressure of a location where the pressure sensor 11 a4 is installed) of a material (a reforming material) supplied to the fuel cell 34, and transmits a detection result thereof to the main control portion 15a of the control device 15. The buffer tank 11 a5 rectifies a gas flow of the material pump 11a6. The material pump 11a6 is a supply device which supplies a material (a reforming material) to the fuel cell 34, and adjusts an amount (a supply flow rate (a flow rate per unit time)) of materials supplied from the supply source Gs in response to a control command value from the main control portion 15a of the control device 15. The material pump 11a6 is a pressure feed device which sucks a reforming material and pressure-feeds the reforming material to a reforming unit 33.

In addition, the reforming material supply pipe 11 a may be provided with a check valve (not illustrated) between the material pump 11 a6 and the fuel cell module 11 (evaporation unit 32). Further, the arrangement order of the fuel shutoff valve 11a1, the desulfurizer 11 a2, the flow rate sensor 11 a3, the pressure sensor 11 a4, the buffer tank 11 a5, and the material pump 11a6 is not limited to the above-described order.

The fuel cell module 11 (30) includes a casing 31, the evaporation unit 32, the reforming unit 33, and the fuel cell 34. The casing 31 is made of a heat insulating material in a box form.

The evaporation unit 32 is heated by a combustion gas which will be described later, so as to evaporate supplied reforming water and thus to generate vapor and also to preheat a supplied reforming material. The evaporation unit 32 mixes the vapor generated in the above-described way with the preheated reforming material and supplies the resulting mixture to the reforming unit 33. The reforming material includes a reforming gaseous fuel such as a natural gas or an LP gas, and a reforming liquid fuel such as kerosene, gasoline, or methanol, and a natural gas is used in the present embodiment.

The evaporation unit 32 is connected to the other end of the water supply pipe 11 b of which one end (lower end) is connected to the water tank 14. In addition, the evaporation unit 32 is connected to the reforming material supply pipe 11 a of which one end is connected to the supply source Gs. The supply source Gs is, for example, a gas supply pipe for town gas, or a gas cylinder for an LP gas.

The reforming unit 33 is heated by the above-described combustion gas and is supplied with heat required in a vapor reforming action, and generates and derives a reforming gas from the mixed gas (the reforming material and the vapor) supplied from the evaporation unit 32. The reforming unit 33 is filled with a catalyst (for example, an Ru or Ni-based catalyst), in which the mixed gas is reformed through a reaction with the catalyst, and thus gases including hydrogen gas, carbon monoxide, and the like are generated (vapor reforming reaction). The reforming gas includes hydrogen, carbon monoxide, carbon dioxide, vapor, a non-reformed natural gas (methane gas), and reforming water (vapor) which was not used for reforming. As mentioned above, the reforming unit 33 generates a reforming gas (fuel) including the reforming material (raw fuel) and the reforming water and supplies the reforming gas to the fuel cell 34. In addition, the vapor reforming action is an endothermic reaction.

The fuel cell 34 is formed by stacking a fuel electrode, an air electrode (oxidant electrode), and a plurality of cells 34a made of an electrolyte which is interposed between both of the electrodes. The fuel cell of the present embodiment is a solid oxide fuel cell, and zirconium oxide which is a kind of solid oxide is used as an electrolyte. As a fuel, hydrogen, carbon monoxide, methane gas, or the like is supplied to the fuel electrode of the fuel cell 34. An operation temperature is 400°C to 1000°C. In addition, power generation is possible at a power generation amount which is equal to or smaller than a rating amount even at 400°C or lower. Further, power generation is allowed to be started at 600°C. Not only hydrogen but also a natural gas or a coal gas may be used as a direct fuel. In this case, the reforming unit 33 may be omitted.

A fuel flow channel 34b is formed at the fuel electrode side of the cells 34a and a reforming gas, which is a fuel, circulates in the fuel flow channel 34b. An air flow channel 34c is formed at the air electrode side of the cells 34a and an air (cathode air), which is an oxidant gas, circulates in the air flow channel 34c.

The fuel cell 34 is provided with a temperature sensor 34d which detects a temperature of the fuel cell 34. The temperature sensor 34d is provided at a central portion in the stacking direction of the cells 34a of the fuel cell 34 and a central portion in the vertical direction. The temperature sensor 34d transmits a detection result to the main control portion 15a of the control device 15.

The fuel cell 34 is provided on a manifold 35. The manifold 35 is supplied with a reforming gas from the reforming unit 33 via a reformed gas supply pipe 38. A lower end (one end) of the fuel flow channel 34b is connected to a fuel outlet of the manifold 35, and a reforming gas which is guided out from the fuel outlet is guided into the lower end thereof and is guided out from an upper end thereof. The cathode air which is delivered by the cathode air blower 11 c1 is supplied via the cathode air supply pipe 11c, and is guided into a lower end of the air flow channel 34c and is guided out from an upper end thereof.

A combustion portion 36 is provided between the fuel cell 34, and the evaporation unit 32 and the reforming unit 33. The combustion portion 36 burns anode off gas (fuel off gas) from the fuel cell 34 and cathode off gas (oxidant off gas) from the fuel cell 34 so as to heat the reforming unit 33.

In the combustion portion 36, the anode off gas is burnt, and thus flames 37 are generated. In the combustion portion 36, the anode off gas is burnt, and thus a combustion exhaust gas is generated. A pair of ignition heaters 36a1 and 36a2 for igniting the anode off gas is provided in the combustion portion 36. In addition, first and second combustion portion temperature sensors 36b1 and 36b2 (hereinafter, simply referred to as a combustion portion temperature sensor 36b in some cases) for detecting a temperature of the combustion portion 36 are provided in the combustion portion 36. Detection results (output signals) from the first and second combustion portion temperature sensors 36b1 and 36b2 are transmitted to the first and second safety control portions 15b1 and 15b2 of the control device 15.

The heat exchanger 12 is supplied with a combustion exhaust gas from the fuel cell module 11 and hot storage water from the hot-water storage tank 21, and exchanges heat between the combustion exhaust gas and the hot storage water. Specifically, the hot-water storage tank 21 stores hot storage water, and is connected to a hot storage water circulation line 22 along which hot storage water is circulated (the hot storage water is circulated in an arrow direction in the figure). A hot storage water circulation pump 22a and the heat exchanger 12 are disposed in this order from a lower end of the hot-water storage tank 21 to an upper end thereof on the hot storage water circulation line 22. An exhaust pipe 11 d extending from the fuel cell module 11 is connected to (provided through) the heat exchanger 12. The heat exchanger 12 is connected to a condensed water supply pipe 12a which is connected to the water tank 14.

In the heat exchanger 12, a combustion exhaust gas from the fuel cell module 11 is guided into the heat exchanger 12 via the exhaust pipe 11 d, and exchanges heat with hot storage water so as to be condensed and cooled. The condensed combustion exhaust gas is discharged to the outside via the exhaust pipe 11 d. In addition, the condensed water is supplied to the water tank 14 via the condensed water supply pipe 12a. Further, the water tank 14 purifies the condensed water by using an ion exchange resin.

An exhaust heat recovery system 20 is constituted by the above-described heat exchanger 12, hot-water storage tank 21 and hot storage water circulation line 22. The exhaust heat recovery system 20 recovers and accumulates exhaust heat of the fuel cell module 11 in hot storage water.

In addition, the inverter device 13 converts a DC voltage which is output from the fuel cell 34 into a predetermined AC voltage which is then output to a power source line 16b connected to an AC system power source 16a and an external power load 16c (for example, electric appliances). Further, the inverter device 13 receives an AC voltage from the system power source 16a via the power source line 16b and converts the AC voltage into a predetermined DC voltage which is then output to the auxiliary equipment A (each pump or blower) or the control device 15.

The control device 15 drives the auxiliary equipment A so as to control an operation of the fuel cell system. The main control portion 15a of the control device 15 comprehensively controls the power generation unit 10 and further the fuel cell system.

As illustrated in Fig. 2, the main control portion 15a is connected to the respective flow rate sensors 11 a3 and 11 c2, the pressure sensor 11 a4, the temperature sensor 34d, the respective pumps 11a6, 11 b1 and 22a, the cathode air blower 11 c1, the ignition heaters 36a1 and 36a2, and a storage portion 15c. The main control portion 15a includes a microcomputer (not illustrated), and the microcomputer includes an input and output interface, a CPU, a RAM, and a ROM (none of which are illustrated) which are connected to each other via a bus. The CPU performs a comprehensive operation of the fuel cell system. The RAM temporarily stores variables required to execute a program, and the ROM stores the program.

The first and second safety control portions 15b1 and 15b2 of the control device 15 respectively control at least a plurality of fuel shutoff valves 11 a1 a and 11 a1 b, and operate independently from the main control portion 15a. As illustrated in Fig. 2, the first safety control portion 15b1 of the control device 15 is connected to the first combustion portion temperature sensor 36b1, a first drive circuit 15e1, a first switch 15f1, and a storage portion 15d1. The first drive circuit 15e1 controls opening and closing of the first fuel shutoff valve 11a1a in response to an opening/closing command from the first safety control portion 15b1. In a case where there is a closing command from the first safety control portion 15b1, the first drive circuit 15e1 stops the supply of a driving voltage to an electromagnetic coil of the first fuel shutoff valve 11a1a from a power source V1. Thus, the electromagnetic coil of the first fuel shutoff valve 11 a1 a is not excited, and the first fuel shutoff valve 11 a1 a enters a closed state by a biasing force of a biasing member. On the other hand, in a case where there is an opening command from the first safety control portion 15b1, the first drive circuit 15e1 starts the supply of a driving voltage to the electromagnetic coil of the first fuel shutoff valve 11a1a from the power source V1. Thus, the electromagnetic coil of the first fuel shutoff valve 11a1a is excited and resists against the biasing force of the biasing member, and thus the first fuel shutoff valve 11a1a enters an open state.

The first switch 15f1 is provided between the power source V1 and the first drive circuit 15e1, and performs connection or disconnection between the power source V1 and the first fuel shutoff valve 11a1a in response to an ON/OFF command from the first safety control portion 15b1. In a case where an ON command is transmitted from the first safety control portion 15b1, the first switch 15f1 connects the power source V1 to the first fuel shutoff valve 11a1a. On the other hand, in a case where an OFF command is transmitted from the first safety control portion 15b1, the first switch 15f1 disconnects the power source V1 from the first fuel shutoff valve 11 a1 a.

The storage portion 15d1 is a data flash memory or an EEPROM.

The second safety control portion 15b2 of the control device 15 is connected to the second combustion portion temperature sensor 36b2, a second drive circuit 15e2, a second switch 15f2, and a storage portion 15d2. The second drive circuit 15e2 has the same configuration as that of the first drive circuit 15e1, and the second switch 15f2 has the same configuration as that of the first switch 15f1. In addition, the first and second switches 15f1 and 15f2 constitute a power source shutoff device 15f which shuts off the supply of the power source voltage V1 to the respective fuel shutoff valves 11a1. Further, hereinafter, the first and second switches 15f1 and 15f2 may be referred to simply as switch 15f.

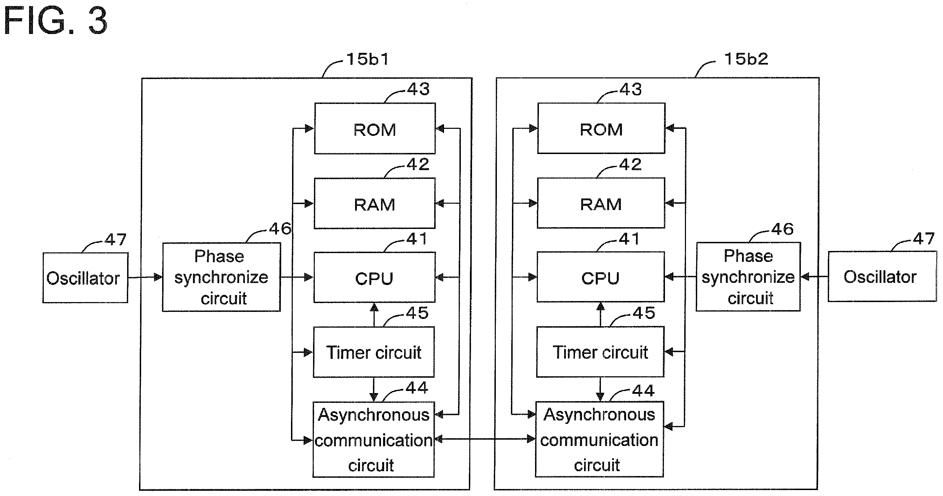

As illustrated in Fig. 3, each of the first and second safety control portions 15b1 and 15b2 is constituted by a microcomputer, and includes a CPU 41, a RAM 42, a ROM 43, a start-stop synchronous communication circuit 44, a timer circuit 45, and a phase synchronization circuit 46 which are connected to each other via a bus.

The CPU 41 mainly controls the fuel shutoff valve 11a1. The RAM 42 temporarily stores variables required in execution of a control program, and the ROM 43 stores the control program. The start-stop synchronous communication circuit 44 can perform communication with the start-stop synchronous communication circuit 44 of another safety control portion. The start-stop synchronous communication circuit 44 is a circuit which performs start-stop synchronous type communication. The start-stop synchronous type is a method of performing transmission and reception by adding information (start bit) indicating starting of transmission of data to leading data and a signal (stop bit) indicating ending of the data transmission to an end of the data every time text information corresponding to one letter is transmitted in serial communication. In the start-stop synchronous type, a synchronous signal is added to data so that synchronization is performed.

The timer circuit 45 is a hardware time measuring instrument. The timer circuit 45 is used to generate cut-in for the CPU 41 at a constant interval (for example, an interval timer), or to check a normal operation of a computer system (for example, a watch dog timer). The timer circuit 45 inputs a signal (a cut-in signal, or a signal during a timer counting operation for generating a reference speed of the start-stop synchronous communication circuit 44) to the CPU 41 or the start-stop synchronous communication circuit 44.

The phase synchronization circuit 46 is an electronic circuit which applies feedback control to an input periodic signal on the basis of the signal and outputs a signal of which a phase is synchronized from a separate oscillator. The phase synchronization circuit 46 synchronizes phases of an input signal and an output signal with each other by inputting a phase difference, to a voltage controlled oscillator (VCO), between the input signal which is used as a reference frequency, and a feedback signal which is output from the VCO and whose frequency changes depending on a voltage.

An oscillator 47 (oscillation circuit) outputs a clock signal. The clock signal is used to match (synchronize) timings of a plurality of circuits with each other when a digital logic circuit operates which is designed so as to be synchronized with a clock. The clock signal is output to the CPU 41, the RAM 42, the ROM 43, the start-stop synchronous communication circuit 44, and the timer circuit 45 via the phase synchronization circuit 46. In addition, the oscillator 47 is provided outside the safety control portion 15b1 but may be provided inside the safety control portion 15b1.

The main control portion 15a, and the first and second safety control portions 15b1 and 15b2 are communicably connected to each other. A detection signal from the first combustion portion temperature sensor 36b1 is input to the first safety control portion 15b1. The detection signal is output to the main control portion 15a via the first safety control portion 15b1. A detection signal from the second combustion portion temperature sensor 36b2 is input to the second safety control portion 15b2. The detection signal is output to the main control portion 15a via the second safety control portion 15b2.

On the other hand, information (a detection signal from the sensor) received by the main control portion 15a is output to the first and second safety control portions 15b1 and 15b2.

### (Abnormality Check Process)

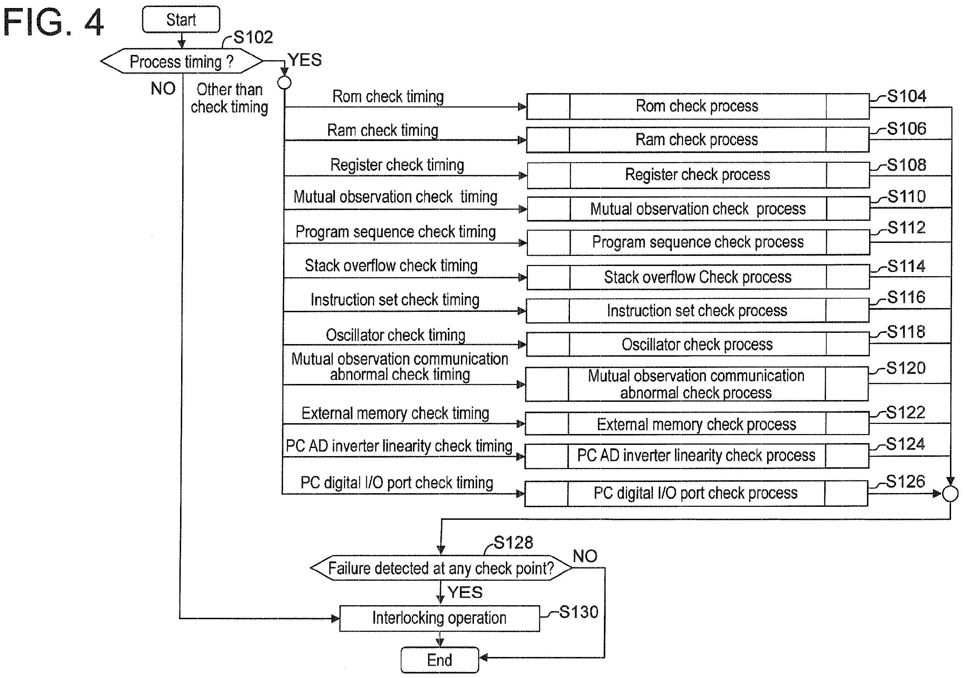

Next, each check process executed by the safety control portion 15b will be described with reference to a flowchart illustrated in Fig. 4. The safety control portion 15b repeatedly executes a program according to the flowchart every predetermined time.

In step S102, the safety control portion 15b determines whether or not process timing comes at which each abnormality check process to be described later is executed. If timing of the abnormality check processes does not come, "NO" is determined in step S102, and the present program is temporarily stopped. On the other hand, if timing of any one of the abnormality check processes does come, "YES" is determined in step S102, and any one of the abnormality check processes (steps S104 to S126) is executed.

If abnormality is not detected in any abnormality check process, that is, the safety control portion 15b has not failed (the microcomputer has not failed), the safety control portion 15b determines "NO" in step S128, and temporarily stops the present program. On the other hand, if abnormality is detected in any one of the abnormality check processes, that is, the safety control portion 15b has failed, the safety control portion 15b determines "YES" in step S128 and executes an interlock operation (step S130).

The interlock operation is an operation of interlocking an operation in which the safety control portion 15b gives a closing instruction to the fuel shutoff valve 11a1 and thus the fuel shutoff valve 11a1 is shutoff with an operation in which the safety control portion 15b gives an Off instruction to the switch 15f and thus the supply of power to the fuel shutoff valve 11a1 is stopped. In addition, only the operation in which the supply of power to the fuel shutoff valve 11a1 may be referred to as the interlock operation.

In addition, all abnormality check processes (steps S104 to S126) correspond to an error detecting portion which can detect own abnormality and abnormality of the other safety control portion. Further, the process in step S130 corresponds to a fuel shutoff control portion which shuts off the supply of a fuel by driving the power source shutoff device 15f so as to shut off the power source voltage V1 in a case where abnormality is detected by the error detecting portion.

As described above, if a failure is detected in the microcomputer, the safety control portion 15b controls shutoff of the fuel shutoff valve 11a1 provided at the reforming material supply pipe 11 a (fuel supply pipe) which is connected to the combustion portion 36 of the power generation unit 10 (combustion device), and also shuts off the supply of power to the fuel shutoff valve 11a1. As a result, even in a case where shutoff control cannot be performed from a driving instruction port due to a failure in the microcomputer port (for example, when a Hi latch failure occurs in the microcomputer port), the fuel shutoff valve 11a1 can be reliably closed.

In addition, in a case where a failure occurs in the microcomputer, the safety control portion 15b may perform the interlock operation when the number of failures is counted and reaches a preset number, and may perform the interlock operation immediately even when one occurrence of a failure in the microcomputer is detected.

In addition, if abnormality of the microcomputer is detected, the safety control portion 15b stores the detection of abnormality in the storage portion 15d. The safety control portion 15b is preferably controlled so that the detection of abnormality of the microcomputer stored in the storage portion 15d (15d1 and 15d2) cannot be erased and the interlock operation cannot be cancelled except when a repairer performs maintenance. In addition, in a case where the detection of abnormality of the microcomputer is stored in the storage portion 15d during activation, the safety control portion 15b is preferably controlled to perform the interlock operation. Consequently, it is possible to prevent accidental erasure of the detection of abnormality of the microcomputer or accidental cancellation of the interlock operation due to a power failure or turning-off of a power switch performed by not a repairer's operation but a user's operation.

### (ROM Check Process)

Hereinafter, each abnormality check process will be described in detail. The safety control portion 15b executes a ROM check process when ROM check execution timing comes (step S104).

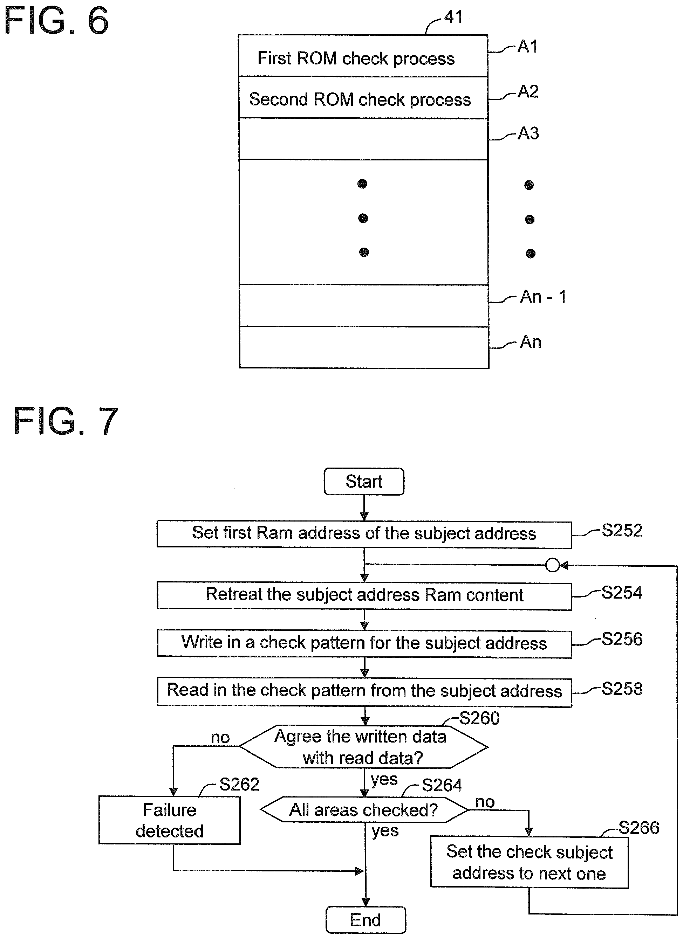

First, the safety control portion 15b executes a first ROM check process. The first ROM check process is executed by a first ROM check process program stored in a first storage area A1, and is a process of checking data in all ROM areas including the first storage area A1. In the data checking, check values such as a CRC code/BCC code/checksum of all ROM areas including the first storage area A1 are calculated, and the calculated results are compared with theoretical values so that it is determined whether or not the ROM 43 is in a normal state. In addition, as illustrated in Fig. 6, the ROM 43 includes a plurality of areas (ROM addresses) A1 to An which are formed by dividing the entire area. Further, CRC stands for cyclic redundancy check. A block checking character (BCC) is a redundancy code used for error detection.

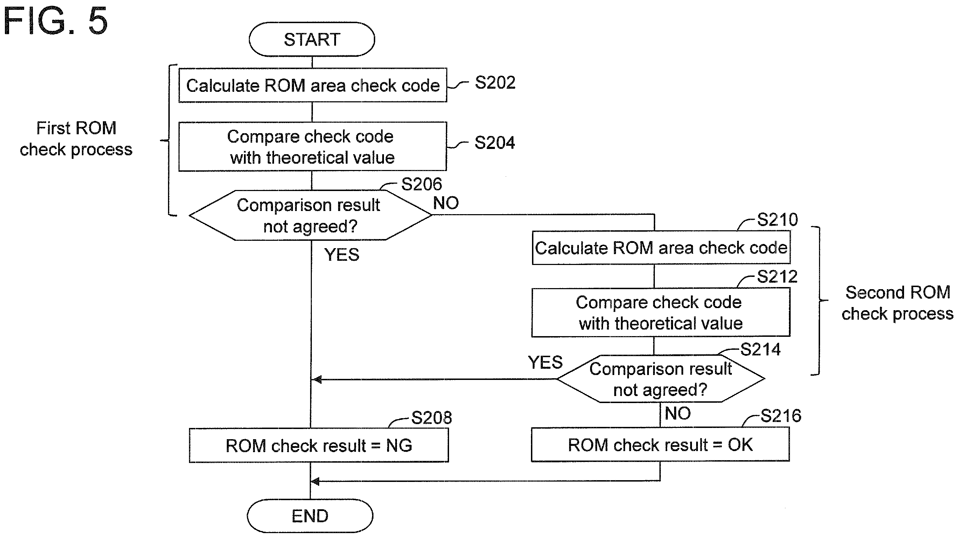

Specifically, the safety control portion 15b executes a program according to a flowchart illustrated in Fig. 5. The safety control portion 15b calculates check codes of all ROM areas including the first storage area A1 in step S202. In step S204, the safety control portion 15b compares the check codes calculated in step S202 with theoretical values stored in advance. If a comparison result in step S204 indicates mismatching, the safety control portion 15b determines "YES" in step S206, and determines that a ROM check result is NG, that is, the ROM 43 is abnormal (step S208). On the other hand, if the comparison result in step S204 indicates matching, the safety control portion 15b determines "NO" in step S206, and causes the program to proceed to step S210 so as to execute a second ROM check process.

The second ROM check process is executed by a second ROM check process program stored in a second storage area A2 which is different from the first storage area A1, and is a process of checking data in all ROM areas including the second storage area A2. In the data checking, check values such as a CRC code/BCC code/checksum of all ROM areas including the second storage area A2 are calculated, and the calculated results are compared with theoretical values so that it is determined whether or not the ROM 43 is in a normal state.

Specifically, the safety control portion 15b calculates check codes of all ROM areas including the second storage area A2 in step S210. In step S212, the safety control portion 15b compares the check codes calculated in step S210 with theoretical values stored in advance. If a comparison result in step S212 indicates mismatching, the safety control portion 15b determines "YES" in step S214, and determines that a ROM check result is NG, that is, the ROM 43 is abnormal (step S208). On the other hand, if the comparison result in step S212 indicates matching, the safety control portion 15b determines "NO" in step S214, and determines that a ROM check process is okay, that is, the ROM 43 is in a normal state (step S216).

In a case where the number of ROM area in which the ROM check process is stored is one, if the ROM area fails, there is a possibility that detection of abnormality thereof and a notification of the detection may not be performed. In contrast, as described above, a plurality of ROM check processes are redundantly disposed in different ROM areas, and thus a failure in the ROM 43 can be reliably detected even if the ROM area fails in which the ROM check process is stored.

The above-described ROM check process (step S104) corresponds to a ROM check portion which detects own abnormality by checking the ROM 43 provided at the safety control portion 15b through self-diagnosis.

### (RAM Check Process)

The safety control portion 15b executes a RAM check process when RAM check execution timing comes (step S106).

The safety control portion 15b performs reading and writing collation (all bits are checked for each address of all RAM areas) on each bit (RAM address) in all the RAM areas, so as to detect a failure such as short-circuit of all memory bits forming the RAM. In a case where data written to the RAM and data read from the RAM match each other, it is determined that the RAM 42 is in a normal state, and in a case where the data does not match each other, it is determined that the RAM 42 has failed.

Specifically, the safety control portion 15b executes a program according to a flowchart illustrated in Fig. 7. The safety control portion 15b sets a RAM leading address to a check target address (step S252), retreats RAM data content of the check target address (step S254), writes a check pattern to the check target address (step S256), and reads the check pattern from the check target address (step S258).

The safety control portion 15b determines whether or not the written data matches the read data in step S260. If both the data does not match each other, the safety control portion 15b determines "no" in step S260, and detects a failure in the RAM 42 (step S262). On the other hand, if both written data and read data do not match each other, the safety control portion 15b determines "yes" in step S260, and proceeds to step S264 so that all areas of the RAM 42 are checked (steps S266, S254 to S260, and S264).

In addition, if check results of data of all the areas of the RAM 42 indicate a normal state, the safety control portion 15b determines "yes" in step S264 and determines that the RAM 42 is in a normal state.

### (Register Check Process)

The safety control portion 15b executes a register check process when register check execution timing comes (step S108).

The safety control portion 15b performs reading and writing collation on each bit in all registers of the CPU 41 in the same manner as in the RAM check process, so as to detect a failure such as short-circuit of all memory bits forming registers. The registers include a general purpose register, a control register, a stack pointer register, and the like.

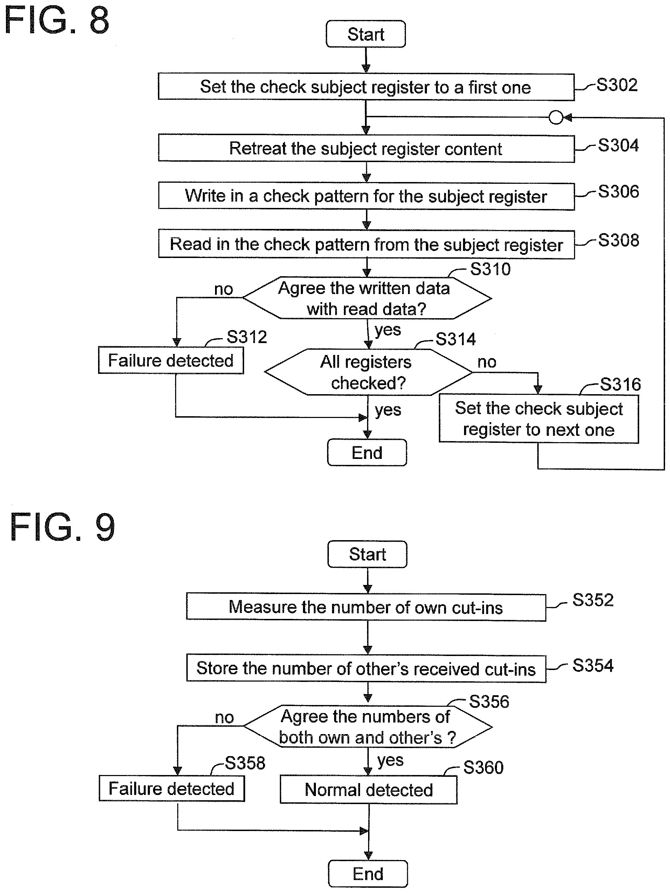

Specifically, the safety control portion 15b executes a program according to a flowchart illustrated in Fig. 8. The safety control portion 15b sets a first register to a check target register (step S302), retreats data content of the check target register (step S304), writes a check pattern to the check target register (step S306), and reads the check pattern from the check target register (step S308).

The safety control portion 15b determines whether or not the written data matches the read data in step S310. If both data do not match each other, the safety control portion 15b determines "no" in step S310, and detects a failure in the register (step S312). On the other hand, if both data match each other, the safety control portion 15b determines "yes" in step S310, and proceeds to step S314 so that all registers are checked (steps S316, S304 to S310, and S314).

In addition, if check results of data of all the registers indicate a normal state, the safety control portion 15b determines "yes" in step S314 and determines that the registers are in a normal state.

### (Mutual Observation Process)

The safety control portion 15b executes a mutual observation process when mutual observation execution timing comes (step S110).

The mutual observation process is a process in which a plurality of safety control portions 15b connected via a communication line observe each other so as to easily detect a failure which cannot be detected with only a single safety control portion 15b. The failure which cannot be detected with only a single safety control portion 15b is, for example, a failure in the timer circuit 45 (interval timer function) which generates cut-in for the CPU 41 at a constant interval.

Specifically, the first safety control portion 15b1 executes a program according to a flowchart illustrated in Fig. 9. The first safety control portion 15b1 measures the number of times of cut-in (per unit time) for the CPU 41 thereof from the timer circuit 45 in step S352. In addition, the first safety control portion 15b1 transmits the measured number of times of cut-in to the second safety control portion 15b2. In step S354, the first safety control portion 15b1 receives the number of times of cut-in for the CPU 41 of the other party (the second safety control portion 15b2) from the timer circuit 45 and stores the number of times of cut-in.

In step S356, the safety control portion 15b1 determines whether or not the number of times of own cut-in matches the number of times of cut-ins of the other party. If both of the numbers of times of cut-in do not match each other, the safety control portion 15b1 determines "no" in step S356 and detects a failure in the timer circuit 45 or the CPU 41 (step S358). On the other hand, if both of the numbers of times of cut-in match each other, the safety control portion 15b1 determines "yes" in step S356 and detects that the timer circuit 45 or the CPU 41 is in a normal state (step S360).

The second safety control portion 15b2 also executes a mutual observation process in the same manner as the first safety control portion 15b1. In addition, instead of calculating the number of times of cut-in per unit time, a cut-in cycle may be calculated. In this case, each safety control portion 15b may determine whether or not a cut-in cycle is within a determination cycle so as to determine whether or not a normal state occurs. This is effective in a case where cut-in cycles of the safety control portions 15b are different from each other.

The above-described mutual observation process (step S110) corresponds to a mutually observing portion which detects abnormality of own safety control portion 15b (for example, the first safety control portion 15b1) or abnormality of other safety control portions 15b (for example, the second safety control portion 15b2) by performing mutual observation with one another through communication with the other safety control portions 15b.

### (Program Sequence Check Process)

The safety control portion 15b executes a program sequence check process when program sequence check execution timing comes (step S112). In a case where there is an unexecuted function in a main cycle, the safety control portion 15b detects the unexecuted function. In other words, the safety control portion 15b counts up a check counter during the execution of each function, and checks whether or not all functions are normally executed without excess or deficiency when a process of a single main cycle is completed.

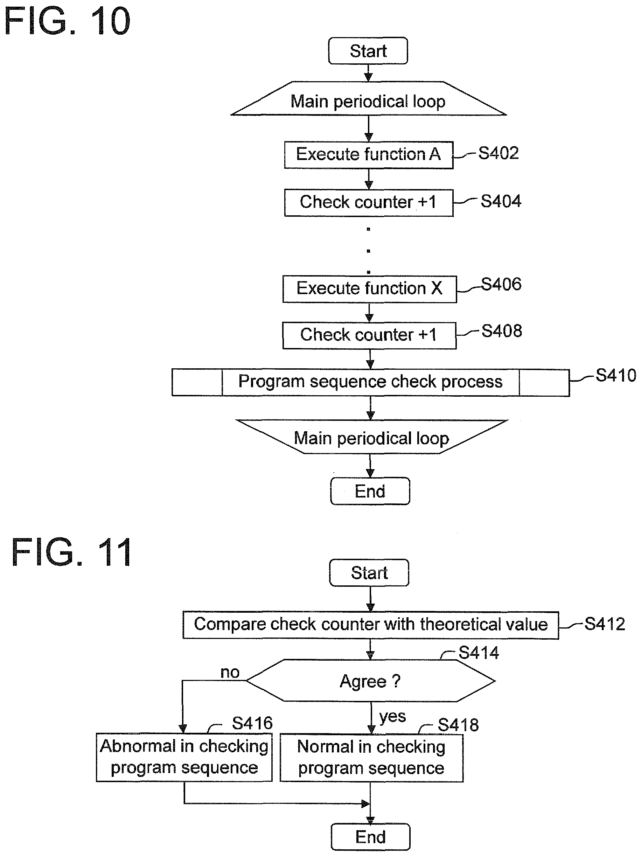

Specifically, the safety control portion 15b executes a program according to a flowchart illustrated in Fig. 10. The safety control portion 15b executes a first function A at a main cycle (step S402), and counts up a check counter during the execution of the function A (step S404). The safety control portion 15b also counts up the check counter during execution of the next function in the same manner as in the function A, executes a last function X (step S406), and counts up the check counter during the execution of the function X (step S408). Then, the safety control portion 15b executes the program sequence check process (step S410).

The safety control portion 15b executes a program according to a flowchart illustrated in Fig. 11. The safety control portion 15b compares a check counter (also referred to as a gate counter value) calculated during the execution of the function X with a theoretical value (step S412). If the check counter does not match the theoretical value, the safety control portion 15b determines "no" in step S414, and detects abnormality as a result of the program sequence check (step S416). On the other hand, if the check counter matches the theoretical value, the safety control portion 15b determines "yes" in step S414, and detects normality as a result of the program sequence check (step S418). In addition, the abnormality as a result of the program sequence check indicates a failure in the CPU 41 such as the presence of an unexecuted function or the presence of a function which is doubly executed.

### (Stack Overflow Check Process)

The safety control portion 15b executes a stack overflow check process when stack overflow check execution timing comes (step S114). The stack overflow check process is a process of checking the occurrence of stack overflow in which a stack is used so as to exceed a usable stack area which is set in advance in a RAM area. The stack area is an area which can be used by software and is normally set in advance. In a case where a stack is used so as to exceed the usable area which is set in advance, there is a high possibility that a software operation may be unstable.

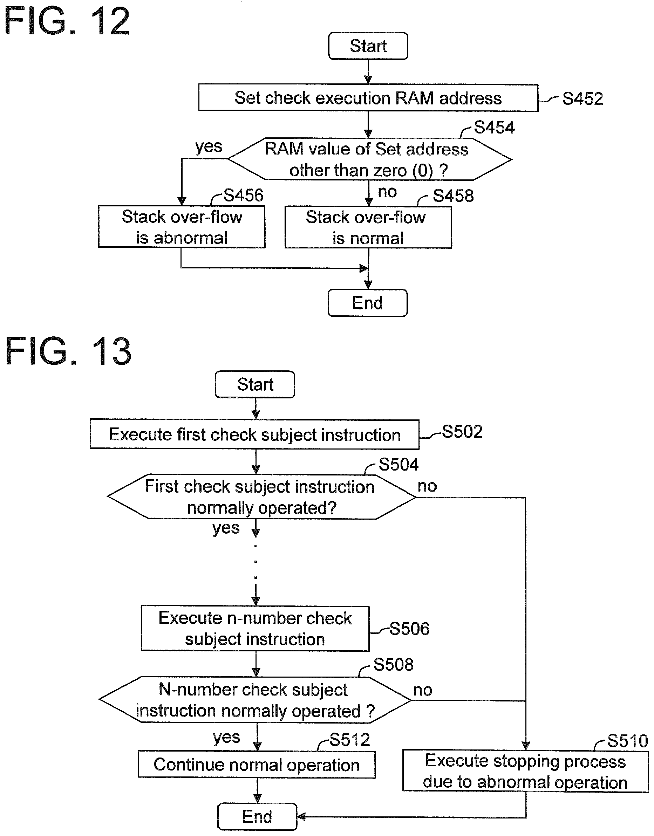

Specifically, the safety control portion 15b executes a program according to a flowchart illustrated in Fig. 12. The safety control portion 15b sets a RAM address to be checked (step S452). As the RAM address to be detected, there is, for example, a leading address of the stack area. In a case where a RAM value of the set address is not an initial value (for example, 0), the safety control portion 15b determines "yes" in step S454, and detects that the stack overflow is abnormal (that is, stack overflow has occurred) (step S456). On the other hand, in a case where the RAM value of the set address is an initial value, the safety control portion 15b determines "no" in step S454, and detects that the stack overflow is not abnormal (normal) (step S458).

### (Command Set Check Process)

The safety control portion 15b executes a command set check process when command set check execution timing comes (step S116). The command set check process is a process of checking a normal operation of all assembler commands which are executed in the CPU 41. The assembler commands to be checked are either all commands which are executable in the CPU 41 or all commands included in software which runs in the microcomputer.

Specifically, the safety control portion 15b executes a program according to a flowchart illustrated in Fig. 13. The safety control portion 15b executes a first check target command (step S502). In a case where the first check target command is not normally operated, the safety control portion 15b determines "no" in step S504 and performs a step of stopping the command set check process assuming that abnormality has occurred (abnormality has detected) (step S510). On the other hand, in a case where the first check target command is normally operated, the safety control portion 15b determines "yes" in step S504 and checks an operation of the next check target command assuming that abnormality has not occurred (normality has detected).

The safety control portion 15b executes an n-th check target command (step S506). In a case where the n-th check target command is not normally operated, the safety control portion 15b determines "no" in step S508 and performs a step of stopping the command set check process assuming that abnormality has occurred (step S510). On the other hand, in a case where the n-th check target command is normally operated, the safety control portion 15b determines "yes" in step S508 and continues to perform an ordinary operation assuming that abnormality has not occurred (normality has detected) (step S512).

In addition, in the above-described example, a normal operation is checked for each command, but a normal operation may be checked after a plurality of commands are collectively executed.

### (Oscillator Check Process)

The safety control portion 15b executes an oscillator check process when oscillator check execution timing comes (step S118). The oscillator check process is executed by using two or more microcomputers (the safety control portions 15b1 and 15b2 in the present embodiment) which communicate with each other through the start-stop synchronous communication and the oscillators 47 connected thereto.

The start-stop synchronous communication is based on communication which is performed at a baud rate which is defined in advance by both of the microcomputers (the safety control portions 15b1 and 15b2). Therefore, if the baud rate is deviated, a parity bit or a stop bit cannot be received at an expected timing, and thus mutual telegram data cannot be correctly received. Each microcomputer transmits/receives communication data by using the start-stop synchronous communication circuit 44 with a clock signal generated by the oscillator 47 as a reference. Therefore, in a case where an original clock signal is deviated, if an error between both of the oscillators 47 is within a certain range, normal communication can be performed with other devices, but if the deviation exceeds the range, normal communication cannot be performed. The deviation of the clock signal is referred to as an oscillator deviation. In the above-described way, even if an exclusive use detection device is not provided, oscillator deviation can be detected.

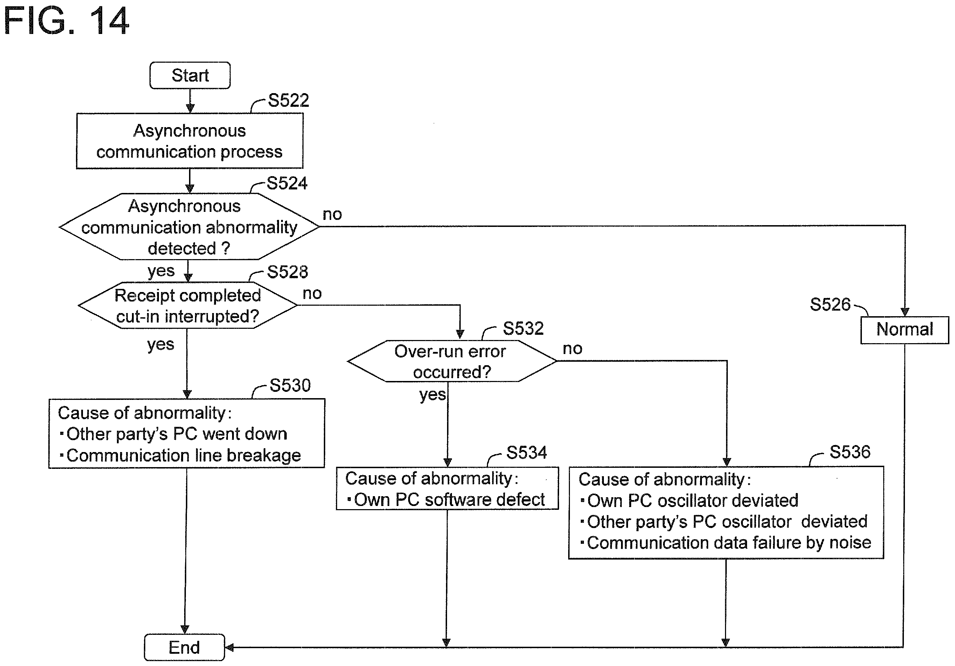

Specifically, the safety control portion 15b executes a program according to a flowchart illustrated in Fig. 14. One safety control portion 15b (the first safety control portion 15b1) periodically communicates with the other safety control portion 15b2 through start-stop synchronous communication in step S522, and detects the above-described communication abnormality. In a case where the abnormality is not detected, the first safety control portion 15b1 determines "no" in step S524, detects that the communication is normal (presuming that the oscillator 47 is normal), and continues to perform an ordinary operation of the fuel cell system (step S526).

In a case where the abnormality is detected, the first safety control portion 15b1 determines "yes" in step S524, and detects that the communication is abnormal (regards that the oscillator 47 is abnormal). Then, the first safety control portion 15b1 causes the program to proceed to step S528 and the subsequent steps, and finally stops an operation (a warm-up operation or a power generating operation) of the fuel cell system.

The first safety control portion 15b1 specifies a cause of the occurrence of the communication abnormality. In a case where reception completion cut-in is suspended, the first safety control portion 15b1 determines "yes" in step S528, and determines that the oscillators 47 of both of the safety control portions 15b1 and 15b2 are normal but communication is suspended due to system being down of the other safety control portion 15b2 or disconnection (breakage) of a communication line (step S530).

In a case where the reception completion cut-in is not suspended, and an overrun error has occurred, the first safety control portion 15b1 determines "no" and "yes" in steps S528 and S532, and determines that reading of reception data from a buffer is delayed due to a defect of own microcomputer software as a cause of the abnormality (step S534).

In a case where the reception completion cut-in is not suspended, and the overrun error does not occur, the first safety control portion 15b1 determines "no" in steps S528 and S532, and determines that the own oscillator 47 is abnormal, the oscillator 47 of the other party is abnormal, or both the oscillators 47 are normal but communication data is corrupted due to noise (step S536).

The above-described oscillator check process (step S118) corresponds to an oscillator check portion which detects abnormality of the own safety control portion 15b (for example, the first safety control portion 15b1) or the other safety control portion 15b (for example, the second safety control portion 15b2) by checking the oscillator 47 provided at the safety control portion 15b through self-diagnosis.

In addition, the two safety control portions have been described as an example, but the present method can achieve the same effect not only in mutual communication between two control portions but also in mutual communication between two or more control devices.

### (Mutual Observation Communication Abnormality Check Process)

The safety control portion 15b executes a mutual observation communication abnormality check process when mutual observation communication abnormality check execution timing comes (step S120). Specifically, the safety control portion 15b checks communication establishment of the mutual observation communication by using CRC or BCC attached to communication telegram which is transmitted to and received from the other safety control portion 15b. If the CRC or the BCC mismatches, or a communication partner terminal is silent, the communication is regarded to be abnormal.

### (External Storage Means Check Process)

The safety control portion 15b executes an external storage means check process when external storage means check execution timing comes (step S122). Specifically, the safety control portion 15b is connected to the storage portion 15d as external storage means, and adds CRC or performs collation checking through data multiplexing in order to check data stored in the storage portion 15d. In a case where abnormality occurs as a result of checking the stored data, the stored data is not reliable, and thus a failure is regarded to have occurred.

### (Check Process of Linearity of AD Converter of Microcomputer)

The safety control portion 15b executes a check process of linearity of an AD converter of the microcomputer when timing of execution of the check process of linearity of an AD converter of the microcomputer comes (step S124). Specifically, the safety control portion 15b includes, as an external circuit of the microcomputer, for example, an AD converter which is connected to a reference voltage circuit generating a plurality of constant voltages and performs AD conversion on the basis of the voltages. The safety control portion 15b checks the AD converter on the basis of an AD conversion result of each voltage from the reference voltage circuit.

The plurality of safety control portions 15b (15b1 and 15b2) receive, for example, branched sensor signals used for abnormality detection, and separately perform AD conversion and abnormality detection. Consequently, even in a case where the AD converter of one CPU fails, the abnormality detection function is not lost.

In addition, AD conversion results may also be transmitted and received through the above-described mutual observation communication, and an AD conversion result in the other microcomputer may be compared with an AD conversion result in the own microcomputer in a case where the same sensor signal is received, and abnormality may be detected if a difference between the AD conversion results is detected as departing from a normal error range.

### (Check Process of Digital I/O Ports of Microcomputer)

The safety control portion 15b executes a check process of digital I/O ports of the microcomputer when timing of execution of the check process of digital I/O ports of the microcomputer comes (step S126). Specifically, the input port of the safety control portion 15b may be checked by making an input signal branch into signals in an external device of the microcomputer, redundantly inputting the signals thereto, and comparing input results with each other. The output port of the safety control portion 15b may be checked by making an output signal branch into signals in an external device of the microcomputer, inputting one signal to the microcomputer, and comparing an output value with an input value.

The plurality of safety control portions 15b (15b1 and 15b2) receive, for example, branched sensor signals used for abnormality detection, and separately perform an input process and abnormality detection. Consequently, even in a case where the input port of one CPU fails, the abnormality detection function is not lost. For example, if a plurality of CPUs have the same output function, and an external circuit is provided so that output values therefrom are logically combined with each other and an instruction is given to the auxiliary equipment A or the like, an output port signal is not unstable even in a case where one CPU output does not have an expected value due to a failure in the port.

As is clear from the above description, the power generation unit 10 (combustion device) of the present embodiment includes the combustion portion 36 and a plurality of auxiliary equipment A used for combustion in the combustion portion 36, in which the plurality of auxiliary equipment A includes at least a plurality of normal closed type fuel shutoff valves 11a1a and 11a1b which is provided at the reforming material supply pipe 11 a (fuel supply pipe) for supplying a fuel to the combustion portion 36 and open and close the reforming material supply pipe 11 a. The power generation unit 10 includes the main control portion 15a which comprehensively controls the power generation unit 10, a plurality of safety control portions 15b1 and 15b2 which respectively control at least the plurality of fuel shutoff valves 11 a1 a and 11 a1 b and operate independently from the main control portion 15a, and the power source shutoff device 15f which shuts off the supply of a power source voltage to the respective fuel shutoff valves 11a1a and 11a1b. Each of the safety control portions 15b1 and 15b2 includes the error detecting portion (steps S104 to S126) which can detect own abnormality and abnormality of other safety control portions 15b1 and 15b2, and the fuel shutoff control portion (step S130) which shuts off the supply of a fuel by driving the power source shutoff device 15f so as to shut off the supply of a power source voltage to the fuel shutoff valves 11a1a and 11 a1 b in a case where abnormality is detected by the error detecting portion.

Consequently, the error detecting portion (steps S104 to S126) of each of the safety control portions 15b1 and 15b2 can detect own abnormality and abnormality of other safety control portions 15b1 and 15b2. Therefore, it is possible to reliably detect a failure in the safety control portions 15b1 and 15b2. In addition, in a case where abnormality is detected by the error detecting portion, the fuel shutoff control portion (step S130) of each of the safety control portions 15b1 and 15b2 drives the power source shutoff device 15f so as to shut off the supply of a power source voltage to the fuel shutoff valves 11a1a and 11a1b, thereby shutting off the supply of a fuel. Therefore, even if the safety control portions 15b1 and 15b2 fail, it is possible to reliably stop the supply of a fuel.

In addition, the fuel shutoff control portion (step S130) of each of the safety control portions 15b1 and 15b2 gives an instruction for closing the fuel shutoff valves 11 a1 a and 11a1b thereto.

Therefore, it is possible to more reliably close the fuel shutoff valves 11 a1 a and 11 a1 b, and thus to more reliably stop the supply of a fuel.

In addition, the error detecting portion (steps S104 to S126) of each of the safety control portion 15b1 and 15b2 includes a ROM check portion (step S104) which detects abnormality thereof (the safety control portions 15b1 and 15b2) by checking the ROM 43 provided at the safety control portions 15b1 and 15b2 through self-diagnosis. The ROM check portion executes a first ROM check process (steps S202 to S206) executed by a first ROM check process program stored in a first storage area of all ROM areas and a second ROM check process (steps S210 to S214) executed by a second ROM check process program stored in a second storage area different from the first storage area.

Consequently, the error detecting portion of each of the safety control portions 15b1 and 15b2 can detect abnormality thereof easily and reliably.

In addition, the error detecting portion (steps S104 to S126) of each of the safety control portion 15b1 and 15b2 includes an oscillator check portion (step S118) which detects own abnormality or abnormality of other safety control portions 15b1 and 15b2 by checking the oscillator 47 provided at the safety control portions 15b1 and 15b2 through self-diagnosis. The oscillator check portion checks the abnormalities on the basis of a communication state of communication data which is transmitted to and received from other safety control portions 15b1 and 15b2 which can communicate with each other through synchronous communication.

Consequently, the error detecting portion of each of the safety control portions 15b1 and 15b2 can detect abnormality thereof or abnormality of other safety control portions 15b1 and 15b2 easily and reliably.

The error detecting portion (steps S104 to S126) of each of the safety control portion 15b1 and 15b2 includes a mutually observing portion (step S110) which detects own abnormality or abnormality of other safety control portions 15b1 and 15b2 by performing mutual observation through communication with the other safety control portions 15b1 and 15b2. The mutually observing portion compares own cut-in information with cut-in information in the other safety control portion 15b1 and 15b2, received through communication so as to detect own abnormality or abnormality of other safety control portions 15b1 and 15b2.

Consequently, the error detecting portion of each of the safety control portions 15b1 and 15b2 can detect abnormality thereof or abnormality of other safety control portions 15b1 and 15b2 easily and reliably.

Further, the above-described fuel cell system is configured to include the power generation unit 10 which is a combustion device.

Consequently, also in the fuel cell system which is configured to include the power generation unit 10 which is a combustion device, the above-described operations and effects can be achieved.

In addition, in the above-described embodiment, the power generation unit 10 has been described as an example of a combustion device, but the present invention is applicable to other combustion devices. As the other combustion devices, a combustion device may be employed which includes a combustion portion and a plurality of auxiliary equipment used for combustion in the combustion portion, in which the plurality of auxiliary equipment includes at least a plurality of normal closed type fuel shutoff valves which is provided at a fuel supply pipe for supplying a fuel to the combustion portion and open and close the fuel supply pipe. Further, the combustion device may include a main control portion which comprehensively controls the combustion device, a plurality of safety control portions which respectively control at least the plurality of fuel shutoff valves and operate independently from the main control portion, and a power source shutoff device which shuts off the supply of a power source voltage to the respective fuel shutoff valves.

### [Description of Reference Numerals and Signs]

10 power generation unit (combustion device), 11 a reforming material supply pipe (fuel supply pipe), 15 control device, 15a main control portion, 15b safety control portion (error detecting portion, fuel shutoff control portion, ROM check portion, oscillator check portion, mutually observing portion), 15b1 first safety control portion, 15b2 second safety control portion, 15f power source shutoff device, 15f1 first switch, 15f2 second switch, 41 CPU, 43 ROM, 47 oscillator, A auxiliary equipment

The present invention pertains to a combustion device and a fuel cell system in which a failure in a control device is detected and upon such failure detection, a fuel cut-off valve can be surely closed. Each of the safety control portions 15b1 and 15b2 includes the error detecting portion (steps S104 to S126) which can detect own abnormality and abnormality of other safety control portions 15b1 and 15b2, and the fuel shutoff control portion (step S130) which shuts off the supply of a fuel by driving the power source shutoff device 15f so as to shut off the supply of a power source voltage to the fuel shutoff valves 11 a1 a and 11 a1 b in a case where abnormality is detected by the error detecting portion.

## Claims

1. A combustion device having a combustion portion (36) and a plurality of auxiliary equipment (A) used for a combustion operation at the combustion portion, the plurality of auxiliary equipment including at least a plurality of normal closed type fuel shutoff valves (11a1a,11a1b) provided at a fuel supply pipe (11 a) for supplying fuel to the combustion portion and opening and closing the fuel supply pipe in which the combustion device further includes:
a main control portion (15a) for over-all controlling of the combustion device;
a plurality of safety control portions (15b1, 15b2) for controlling at least the plurality of fuel shutoff valves and operable independently of the main control portion; and
a power source shutoff device (15f) for shutting off the supply of power source voltage to the each of the plurality of fuel shutoff valves,
in which each of the plurality of the safety control portions includes an error detecting portion (step S104 to step S126) for detecting own abnormality and abnormality of other safety control portions and a fuel shutoff control portion (step S130) for shutting off the supply of the fuel by shutting off the supply of the power source voltage by driving the power source shutoff device when an error is detected by the error detecting portion.

2. The combustion device according to claim 1,
wherein the fuel shutoff control portion further controls to give instructions to the fuel shutoff valve to close.

3. The combustion device according to claim 1 or 2,
wherein the error detecting portion includes a ROM check portion (step S104) for detecting own abnormality by checking ROM provided at the safety control portion by self-diagnosis, and the ROM check portion executes a first check process conducted by a first ROM check process program stored in a first storing area in the entire ROM area and a second ROM check process conducted by a second ROM check process program stored in a second storing area different from the first storing area.

4. The combustion device according to claim 1 or 2,
wherein the error detecting portion includes an oscillator check portion (step S118) for detecting an existence of own abnormality or abnormality of other safety control portions by checking an oscillator provided at the safety control portions by self-diagnosis, and the oscillator check portion checks the abnormalities based on the data communication state which is the state under communication with other safety control portions which is mutually communicable through synchronizing communication.

5. The combustion device according to claim 1 or 2,
wherein the error detecting portion includes a mutually observing portion (step S110) for detecting an existence of own abnormality or abnormality of other safety control portions by mutually observing with one another through communication with the other safety control portions and the mutually observing portion comparing an own cut-in information with another cut-in information in other safety control portions received through communication thereby to detect an existence of abnormality of own or of other safety control portions.

6. a fuel cell system including the combustion device according to any one of claims 1 through 5.

## Patentansprüche

1. Verbrennungsvorrichtung mit einem Verbrennungsabschnitt (36) und einer Vielzahl von für einen Verbrennbetrieb bei dem Verbrennungsabschnitt verwendeten Hilfsausstattungen (A), wobei die Vielzahl von Hilfsausstattungen zumindest eine Vielzahl von Absperrventilen vom Normalgeschlossentyp (11a1a, 11a1b) aufweisen, die an einem Brennstoffzufuhrrohr (11a) zur Zufuhr von Brennstoff zu dem Verbrennungsabschnitt vorgesehen sind und das Brennstoffzufuhrrohr öffnen und schließen, wobei die Verbrennungsvorrichtung ferner umfasst
einen Hauptsteuerabschnitt (15a) zur Gesamtsteuerung der Verbrennungsvorrichtung,
eine Vielzahl von unabhängig von dem Hauptsteuerabschnitt betreibbaren Sicherheitssteuerabschnitten (15b1, 15b2) zur Steuerung von zumindest der Vielzahl von Brennstoffabschaltventilen, und
einer Energiequellenabschaltvorrichtung (15f) zur Abschaltung der Zufuhr von Energiequellenspannung zu jedem der Vielzahl von Brennstoffabschaltventilen,
wobei jeder der Vielzahl der Sicherheitssteuerabschnitte einen Fehlererfassungsabschnitt (Schritt S104 bis Schritt S126) zur Erfassung einer eigenen Anomalie und einer Anomalie anderer Sicherheitssteuerabschnitte aufweist, und einen Brennstoffabschaltsteuerabschnitt (Schritt S130) zur Abschaltung der Zufuhr des Brennstoffs durch Abschaltung der Zufuhr der Energiequellenspannung durch Ansteuerung der Energiequellenabschaltvorrichtung, wenn ein Fehler durch den Fehlererfassungsabschnitt erfasst ist, aufweist.

2. Verbrennungsvorrichtung nach Anspruch 1,
wobei der Brennstoffabschaltsteuerabschnitt ferner steuert, um Anweisungen an das Brennstoffabschaltventil zu geben, zu schließen.

3. Verbrennungsvorrichtung nach Anspruch 1 oder 2,
wobei der Fehlererfassungsabschnitt einen ROM-Überprüfungsabschnitt (Schritt S104) zur Erfassung einer eigenen Anomalie durch Überprüfung eines bei dem Sicherheitssteuerabschnitt vorgesehenen ROM durch Selbstdiagnose umfasst, und wobei der ROM-Überprüfungsabschnitt einen ersten Überprüfungsprozess ausführt, der durch ein in einem ersten Speicherbereich in dem gesamten ROM-Bereich gespeicherten ersten ROM-Überprüfungsprozessprogramm durchgeführt wird, und einen zweiten ROM-Überprüfungsprozess ausführt, der durch ein in einem zweiten Speicherbereich verschieden von dem ersten Speicherbereich gespeicherten zweiten ROM-Überprüfungsprozessprogramm durchgeführt wird.

4. Verbrennungsvorrichtung nach Anspruch 1 oder 2,
wobei der Fehlererfassungsabschnitt einen Oszillatorüberprüfungsabschnitt (Schritt S118) zur Erfassung einer Existenz einer eigenen Anomalie oder einer Anomalie anderer Sicherheitssteuerabschnitte durch Überprüfung eines bei den Sicherheitssteuerabschnitten vorgesehenen Oszillators durch Selbstdiagnose umfasst, und wobei der Oszillatorüberprüfungsabschnitt die Anomalien basierend auf dem Datenkommunikationszustand überprüft, der der Zustand unter Kommunikation mit anderen Sicherheitssteuerabschnitten ist, der gegenseitig mittels synchronisierender Kommunikation kommunizierbar ist.

5. Verbrennungsvorrichtung nach Anspruch 1 oder 2,
wobei der Fehlererfassungsabschnitt einen Gegenseitigüberwachungsabschnitt (Schritt S110) zur Erfassung einer Existenz einer eigenen Anomalie oder einer Anomalie anderer Sicherheitssteuerabschnitte durch gegenseitige Überwachung untereinander mittels Kommunikation mit den anderen Sicherheitssteuerabschnitten umfasst, und wobei der Gegenseitigüberwachungsabschnitt eine eigene zugeschaltete Information mit einer mittels Kommunikation empfangenen anderen zugeschalteten Information bei anderen Sicherheitssteuerabschnitten vergleicht, wodurch eine Existenz einer Anomalie von eigenen oder anderen Sicherheitssteuerabschnitten erfasst wird.

6. Brennstoffzellensystem mit der Verbrennungsvorrichtung nach einem der Ansprüche 1 bis 5.

## Revendications

1. Dispositif de combustion qui possède une partie de combustion (36) et une pluralité d'équipements auxiliaires (A) utilisés pour une opération de combustion au niveau de la partie de combustion, la pluralité d'équipements auxiliaires comprenant au moins une pluralité de robinets d'arrêt de combustible de type normal fermé (11a1a, 11a1b) prévus au niveau d'une conduite d'alimentation en combustible (11a) destinée à fournir du combustible à la partie de combustion et à ouvrir et à fermer la conduite d'alimentation en combustible, le dispositif de combustion comprenant en outre :
une partie de commande principale (15a) destinée à contrôler l'ensemble du dispositif de combustion ;
une pluralité de parties de contrôle de sécurité (15b1, 15b2) destinées à contrôler au moins la pluralité de robinets d'arrêt de combustible et qui peuvent être utilisées indépendamment de la partie de commande principale ; et
un dispositif de coupure de source d'alimentation (15f) destiné à couper l'alimentation en tension, par la source d'énergie, de chacun de la pluralité de robinets d'arrêt de combustible,
dans lequel chacune de la pluralité de parties de contrôle de sécurité comprend une partie de détection d'erreurs (étape S104 à étape S126) destinée à détecter une anomalie propre et une anomalie des autres parties de contrôle de sécurité, et une partie de commande de coupure de combustible (étape S130) destinée à couper l'alimentation en combustible en coupant l'alimentation en tension, par la source d'énergie, en déclenchant le dispositif de coupure de source d'énergie lorsqu'une erreur est détectée par la partie de détection d'erreurs.

2. Dispositif de combustion selon la revendication 1,
dans lequel la partie de contrôle de coupure de combustible exécute une commande afin de demander au robinet d'arrêt de combustible de se fermer.

3. Dispositif de combustion selon la revendication 1 ou 2,
dans lequel la partie de détection d'erreurs comprend une partie de vérification de ROM (étape S104) destinée à détecter une anomalie propre en vérifiant la ROM prévue au niveau de la partie de contrôle de sécurité, par autodiagnostic, et la partie de vérification de ROM exécute un premier processus de vérification effectué par un premier programme de processus de vérification de ROM stocké dans une première zone de stockage de la ROM entière, et un second processus de vérification de ROM effectué par un second programme de processus de vérification de ROM stocké dans une seconde zone de stockage différente de la première zone de stockage.

4. Dispositif de combustion selon la revendication 1 ou 2,
dans lequel la partie de détection d'erreurs comprend une partie de vérification d'oscillateur (étape S118) destinée à détecter l'existence d'une anomalie propre ou d'une anomalie des autres parties de contrôle de sécurité en vérifiant un oscillateur prévu au niveau des parties de contrôle de sécurité par autodiagnostic, et la partie de vérification d'oscillateur vérifie les anomalies sur la base de l'état de communication de données qui est l'état de communication avec les autres parties de contrôle de sécurité qui peuvent communiquer mutuellement par synchronisation.

5. Dispositif de combustion selon la revendication 1 ou 2,
dans lequel la partie de détection d'erreurs comprend une partie d'observation (étape S110) destinée à détecter l'existence d'une anomalie propre ou d'une anomalie des autres parties de contrôle de sécurité en les observant mutuellement par le biais d'une communication avec les autres parties de contrôle de sécurité, la partie d'observation comparant des informations de commutation avec d'autres informations de commutation dans les autres parties de contrôle de sécurité, reçues par le biais d'une communication, afin de détecter l'existence d'une anomalie propre ou d'une anomalie des autres parties de contrôle de sécurité.

6. Système de pile à combustible qui comprend le dispositif de combustion selon l'une quelconque des revendications 1 à 5.
